# EUROPEAN PATENT APPLICATION

(11) **EP 4 546 738 A1**
(43) Date of publication of application: **30.04.2025**
(21) Application number: 23826246.3
(22) Date of filing: 14.06.2023
(51) Int. Cl.: H04L 41/0896

(54) **BANDWIDTH RESOURCE ALLOCATION METHODS, APPARATUS, TERMINAL, OPTICAL NETWORK UNIT, AND STORAGE MEDIUM**

(30) Priority: 21.06.2022 CN 202210705348
(71) Applicant: ZTE Corporation, Shenzhen, Guangdong 518057 (CN)
(72) Inventor: WANG, Peng, Shenzhen, Guangdong 518057 (CN); CAI, Liyong, Shenzhen, Guangdong 518057 (CN); ZHANG, Lin, Shenzhen, Guangdong 518057 (CN)
(74) Representative: Brunazzi, Stefano
(86) International application number: PCT/CN2023/100236
(87) International publication number: WO 2023/246597

(57) **Abstract**

Disclosed in the present application are bandwidth resource allocation methods, an apparatus, a terminal, an optical network unit, and a storage medium. A bandwidth resource allocation method of the present application comprises: acquiring a bandwidth resource of a downlink optical port of an optical network unit, acquiring wireless bandwidth resources amongst optical routers, and acquiring a bandwidth resource demand for east-west communication (S201); and, according to gaps between the bandwidth resource of the downlink optical port of the optical network unit and said bandwidth resource demand and between the wireless bandwidth resources east-west amongst the optical routers and said bandwidth resource demand, dynamically allocating a target bandwidth resource for east-west communication (S202).

## Description

### Cross-Reference to Related Application

The present disclosure is based upon and claims the benefit of priority from Chinese Patent Application No. 202210705348.5, filed on June 21, 2022, the entire disclosure of which is incorporated herein by reference.

### Technical Field

The present disclosure relates to the field of optical communications, and in particular, to bandwidth resource allocation methods and apparatuses, a terminal, an optical network unit, and a storage medium.

### Background

With the continuous development of optical communication technologies, bandwidth network services are moving towards the Fifth generation of Fixed Communication (F5G) era dominated by 10G PON and Wi-Fi 6. Compared with the previous generation of fixed access technology, F5G has a series of excellent characteristics such as ultra-high network access rate, all-optical connection, and excellent network experience. F5G home private network is based on fiber to the home, extending the optical fiber to the room to achieve all-optical networking within the home, and combining 10G PON and Wi-Fi 6 technologies to achieve whole-house gigabit coverage, solving the problems of insufficient home Wi-Fi signal coverage and non-complying rates.

For traditional optical access networks, optical network units are deployed in separate houses with no direct data exchange between different houses. However, for Fiber to the Room (FTTR) networks, different rooms generally have different Internet of Things (IoT) devices, leading to east-west communication data transmission between optical routers in different rooms, for example, PCs or smart-phones in different rooms may perform data transmission through the optical routers. The east-west communication is generally carried out through Point-to-Multipoint (P2MP) optical network units for data forwarding, but there are issues such as consuming the downstream optical port's uplink and downlink bandwidth and the possibility of optical router's uplink packets flooding to other optical routers, occupying downlink bandwidth, which ultimately leads to channel congestion in the downstream optical port and obstruction of ordinary data flow transmission, significantly affecting user experience.

Therefore, the aforementioned technical problems in the related art need to be urgently resolved.

### Summary

The present disclosure aims to solve one of the technical problems in the related art. To this end, the embodiments of the present disclosure provide bandwidth resource allocation methods and apparatuses, a terminal, an optical network unit, and a storage medium.

According to an aspect of the embodiments of the present disclosure, a bandwidth resource allocation method is provided, and the bandwidth resource allocation method includes: acquiring a bandwidth resource of a downstream optical port of an optical network unit; acquiring a wireless bandwidth resource between optical routers; acquiring a bandwidth resource demand for east-west communication; and dynamically allocating a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

According to an aspect of the embodiments of the present disclosure, a bandwidth resource allocation method is provided, and the bandwidth resource allocation method includes: sending a bandwidth resource demand for east-west communication to an optical network unit, so that the optical network unit executes the following operations: acquiring a bandwidth resource of a downstream optical port of an optical network unit; acquiring a wireless bandwidth resource between optical routers; and dynamically allocating a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

According to an aspect of the embodiments of the present disclosure, a bandwidth resource allocation apparatus is provided, and the bandwidth resource allocation apparatus includes: a first module, configured to acquire a bandwidth resource of a downstream optical port of an optical network unit; a second module, configured to acquire a wireless bandwidth resource between optical routers; a third module, configured to acquire a bandwidth resource demand for east-west communication; and a fourth module, configured to dynamically allocate a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

According to an aspect of the embodiments of the present disclosure, a bandwidth resource allocation apparatus is provided, and the bandwidth resource allocation apparatus includes: at least one processor; and at least one memory for storing at least one program, wherein the at least one program, when being executed by the at least one processor, implements the bandwidth resource allocation method as described in the foregoing embodiments.

According to an aspect of the embodiments of the present disclosure, a terminal is provided, including: a memory, a processor and a computer program stored in the memory and capable of running on the processor, wherein the processor, when executing the computer program, implements the bandwidth resource allocation method as described in the foregoing embodiments.

According to an aspect of the embodiments of the present disclosure, an optical network unit is provided, including: a memory, a processor and a computer program stored in the memory and capable of running on the processor, wherein the processor, when executing the computer program, implements the bandwidth resource allocation method as described in the foregoing embodiments.

According to an aspect of the embodiments of the present disclosure, a computer-readable storage medium is provided, the computer-readable storage medium stores computer-executable instructions, wherein the computer-executable instructions are used for executing the bandwidth resource allocation methods as described in the foregoing embodiments.

Additional aspects and advantages of the present disclosure will be given in part in the following descriptions, become apparent in part from the following descriptions, or be learned from practice of the present disclosure.

### Brief Description of the Drawings

To more clearly illustrate the technical solutions of the embodiments of the present disclosure, a brief introduction to the drawings used in the description of the embodiments will be provided below. It is apparent that the drawings described below are merely some embodiments of the present disclosure, and for those having ordinary skill in the art, it is possible to obtain other drawings based on these drawings without the need for creative effort.
Fig. 1 is a schematic diagram of a system in which optical routers conduct east-west communication through an optical network unit according to some embodiments of the present disclosure;
Fig. 2 is a flowchart of a bandwidth resource allocation method according to some embodiments of the present disclosure;
Fig. 3 is a flowchart of a method for allocating an east-west communication resource according to a bandwidth resource of a downstream optical port and a wireless bandwidth resource between optical routers according to some embodiments of the present disclosure;
Fig. 4 is a flowchart of a method for flooding a packet and limiting a flooding rate of packets according to some embodiments of the present disclosure;
Fig. 5 is a schematic diagram of east-west communication conducted between optical routers and an optical network unit based on three results of bandwidth resource allocation acquired by determination logic according to an exemplary embodiment provided in some embodiments of the present disclosure;
Fig. 6 is a schematic diagram of a bandwidth resource allocation apparatus according to some embodiments of the present disclosure; and
Fig. 7 is a schematic diagram of another bandwidth resource allocation apparatus according to some embodiments of the present disclosure.

### Detailed Description of the Embodiments

To better enable those having ordinary skill in the art to understand the technical solution of the present disclosure, the technical solution of the embodiments of the present disclosure is described clearly and completely as follows with reference to the drawings of the embodiments of the present disclosure. Obviously, the described embodiments are only part of the embodiments of the present disclosure, not all of them. Based on the embodiments in the present disclosure, all other embodiments obtained by those having ordinary skill in the art without creative effort should be within the scope of protection of the present disclosure.

The terms "first", "second", "third", and "fourth" etc., used in the specification, the claims and the drawings of the present disclosure are used to distinguish different objects and are not intended to describe a specific order. In addition, the terms "include" and "have" and other forms are intended to cover non-exclusive inclusion. For example, a process, method, system, product, or device that includes a series of operations or units is not limited to the listed operations or units, but may optionally include operations or units that are not listed, or may optionally include other operations or units inherent to these processes, methods, products, or devices.

The mention of "embodiment" in the present disclosure means that specific features, structures, or characteristics described in conjunction with the embodiments can be included in at least one embodiment of the present disclosure. The phrase "embodiment" appearing at various places in the specification does not necessarily refer to the same embodiment, nor does it refer to independent or alternative embodiments that are exclusive to other embodiments. It is explicitly and implicitly understood by those having ordinary skill in the art that the embodiments described in the present disclosure can be combined with other embodiments.

Before providing further detailed descriptions of the embodiments of the present disclosure, explanations of the terms involved in the embodiments of the present disclosure are provided, and the terms involved in the embodiments of the present disclosure are applicable to the following explanations.

AON: An All Optical Network (AON) refers to a network where all functions of network communication are directly completed at the optical layer, that is, signal storage, transmission, and switching processing are directly conducted in the optical domain. In this network, optical nodes replace existing electrical nodes, and the network is based on optical fibers to form a direct optical communication network, which is also a broadband network that uses optical wave technology to complete information transmission and switching. Since there is no electrical processing throughout the transmission process, various transmission methods such as Plesiochronous Digital Hierarchy (PDH), Synchronous Digital Hierarchy (SDH), and Asynchronous Transfer Mode (ATM) can be used, enhancing the utilization of network resources.

FTTR: Fiber to The Room (FTTR) refers to an All Optical Network, specifically the technology where optical fibers are laid out to remote nodes, which is the basic technical approach for fiber access. Corresponding terms similar to FTTR include Fiber to The Building (FTTB), Fiber to The Curb (FTTC), Fiber to The Zone (FTTZ), and Fiber to The Home (FTTH). Different topological structures such as bus, ring, star, or tree can be used during deployment. FTTR can be implemented based on two technical solutions: Point to Point (P2P) and Point to Multi-Point (P2MP). In the P2MP network configuration, an uplink optical port of the P2MP optical network unit is generally 10G PON, and a downstream optical port may be GPON or 10G PON. The network is formed by cascading optical routers through an optical splitter. The P2MP technical solution has the advantages of having many downlink devices, easy expansion, and the ability to exceed gigabit speeds for single-point testing.

P2P: P2P stands for Peer-to-Peer networking, which is a distributed application architecture that distributes tasks and workloads among peers, and is a form of networking or network structure formed by the peer-to-peer model at the application layer. In a P2P network environment, multiple devices connected to each other are on an equal footing, with each device having the same functionality and no distinction between master and slave.

P2MP: Point to Multiple Points (P2MP) refers to communication between a central transmitter and a series of receivers. P2MP is typically set up in three segments to allow frequent reuse.

East-West Communication: In traditional optical access networks, optical network units are deployed in individual houses/rooms, and there is no direct data exchange between different houses/rooms. However, in FTTR networks, different rooms generally have different network devices, leading to east-west communication data transmission between optical routers in different rooms, such as data transmission between PCs or smart phones in different rooms through optical routers.

10G PON: 10G PON includes three modes: 10G EPON, XGPON, and XGSPON. A Passive Optical Network (PON) network refers to a network where there are no active electronic devices in an Optical Distribution Network (ODN) between an Optical Line Termination (OLT) and an Optical Network Unit (ONU), which is a pure medium network. The system composition of 10G EPON technology is basically the same as that of 1G EPON, but requires OLT, ONU, and ODN that support 10Gbit/s speeds. 10G EPON comes in two forms: asymmetric 10Gbit/s EPON and symmetric 10G EPON. The asymmetric system only achieves a downlink rate of 10Gbit/s, while the uplink rate remains at 1Gbit/s. 10G EPON continues to adopt the typical topology structure of 1G EPON in system structure. XGPON, also known as 10G GPON, is an asymmetric PON with uplink/downlink rates of 2.5G/10G, and a splitting ratio of 1:128. Under the same splitting ratio, the maximum transmission distance of 10G GPON can reach 40KM. XGSPON is a technological evolution of GPON and XGPON, supporting mixed access of ONUs of GPON, XGPON, and XGSPON types. XGSPON is a symmetric PON with uplink/downlink rates of 10G/10G.

With the continuous development of optical communication technologies, bandwidth network services are moving towards the Fifth generation of Fixed Communication (F5G) era dominated by 10G PON and Wi-Fi 6. Compared with the previous generation of fixed access technology, F5G has a series of excellent characteristics such as ultra-high network access rate, all-optical connection, and excellent network experience. F5G home private network is based on fiber to the home, extending the optical fiber to the room to achieve all-optical networking within the home, and combining 10G PON and Wi-Fi 6 technologies to achieve whole-house gigabit coverage, solving the problems of insufficient home Wi-Fi signal coverage and non-complying rates.

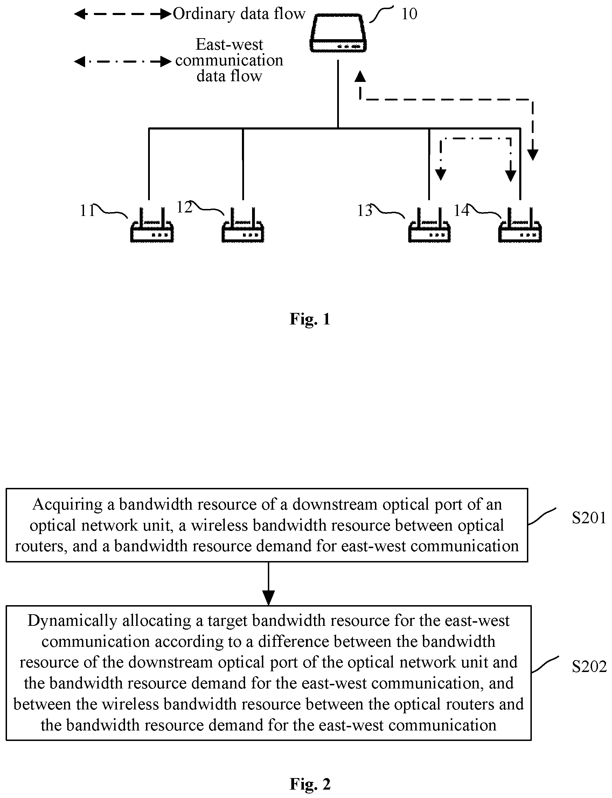

For traditional optical access networks, optical network units are deployed in separate houses with no direct data exchange between different houses. However, for Fiber to the Room (FTTR) networks, different rooms generally have different Internet of Things (IoT) devices, leading to east-west communication data transmission between optical routers in different rooms. Fig. 1 is a schematic diagram of a system in which optical routers conduct east-west communication through an optical network unit according to some embodiments of the present disclosure. Referring to Fig. 1, an optical network unit 10 is connected to an optical router 11, an optical router 12, an optical router 13, and an optical router 14, an ordinary data flow exists between the optical routers and the optical network unit 10, and an east-west communication data flow exists between different optical routers. The east-west communication is generally carried out through Point-to-Multipoint (P2MP) optical network units for data forwarding, but there are issues such as consuming the downstream optical port's uplink and downlink bandwidth and the possibility of optical router's uplink packets flooding to other optical routers, occupying downlink bandwidth, which ultimately leads to channel congestion in the downstream optical port and obstruction of ordinary data flow transmission, significantly affecting user experience.

Based on this, the present disclosure proposes bandwidth resource allocation methods and apparatuses, a terminal, an optical network unit, and a storage medium, which can reduce the bandwidth consumption of the downstream optical port in the east-west communication, improve the utilization rate of the downstream optical port and wireless bandwidth, and enhance the user experience. It should be noted that the bandwidth resource allocation methods and apparatuses, the terminal, the optical network unit, and the storage medium described in the present disclosure are not only applicable to optical fiber network scenarios but also to Asymmetric Digital Subscriber Line (ADSL) broadband scenarios. Due to the similar architecture between optical fiber network and ADSL broadband scenarios, only an optical fiber network scenario is taken as an example for description in the description.

Fig. 2 is a flowchart of a bandwidth resource allocation method according to some embodiments of the present disclosure. Referring to Fig. 2, the bandwidth resource allocation method provided in the embodiments of the present disclosure includes the following operations S201 and S202.

In operation S201, a bandwidth resource of a downstream optical port of an optical network unit, a wireless bandwidth resource between optical routers, and a bandwidth resource demand for east-west communication (i.e., a bandwidth resource amount required by east-west communication) are acquired.

Communication between the optical routers and the optical network unit, between the optical routers and terminals, and between the optical routers all require a certain amount of bandwidth resources. The bandwidth resource (i.e., bandwidth resource amount) acquired in this embodiment refers to the amount of data that can be transmitted through the link in a time unit, specifically including bandwidth, priority of bandwidth allocation, and the occupancy rate of high-speed bandwidth. When optical routers in adjacent rooms are close to each other, in addition to east-west communication through the optical network unit, east-west data transmission can also be carried out through wireless means, saving the bandwidth resource of the downstream optical port of the optical network unit. The wireless east-west data transmission can be achieved through mesh networking of optical routers or other wireless technologies.

Based on this, if there is east-west data transmission between optical routers through wireless means, the method of acquiring the wireless bandwidth resource between the optical routers in operation S201 includes: acquiring the wireless bandwidth resource between the optical routers based on a private data protocol; in a case where the wireless bandwidth resource between the optical routers is less than a preset value, giving a prompt. For example, the optical network unit may acquire wireless networking and wireless bandwidth resource utilization between the optical routers in real time through private Protocol Layer Operations, Administration, and Maintenance (PLOAM) messages, ONT Management and Control Interface (OMCI) messages, or other private data protocols, and determine whether the wireless bandwidth resource between the optical routers is sufficient. The criterion for whether the wireless bandwidth resource between the optical routers is sufficient may be whether the wireless bandwidth resource between the optical routers is below a preset value. If the wireless bandwidth resource between optical routers is below the preset value, it may represent that the current wireless bandwidth resource between the optical routers is not sufficient, and a prompt should be given to the relevant technician to reduce the fault rate of east-west data transmission between the optical routers.

In operation S202, a target bandwidth resource for the east-west communication is dynamically allocated according to a difference between the bandwidth resource of the downstream optical port of the optical network unit and the bandwidth resource demand for the east-west communication, and between the wireless bandwidth resource between the optical routers and the bandwidth resource demand for the east-west communication.

It should be noted that the difference in operation S202 includes at least the difference in bandwidth, for example, in a case where the bandwidth resource of the downstream optical port of the optical network unit is mbps and the bandwidth resource demand for the east-west communication is nbps, then the difference between m and n is the difference between the bandwidth resource of the downstream optical port of the optical network unit and the bandwidth resource demand for the east-west communication. The difference in operation S202 may also include the difference in bandwidth transmission rates, for example, in a case where the bandwidth resource of the downstream optical port of the optical network unit is mbps and the bandwidth resource demand for the east-west communication is nbps, then the rate difference between m and n is the difference between the bandwidth resource of the downstream optical port of the optical network unit and the bandwidth resource demand for the east-west communication. Furthermore, the difference may be represented as either the difference or the ratio between the two parameters, and this specification does not unduly limit the difference relative to the bandwidth resource demand.

In some embodiments, in operation S202, according to the difference between the bandwidth resource of the downstream optical port of the optical network unit and the bandwidth resource demand for the east-west communication, and between the wireless bandwidth resource between the optical routers and the bandwidth resource demand for the east-west communication, the bandwidth resource allocation method in this embodiment further includes: in a case where the bandwidth resource of the downstream optical port or the wireless bandwidth resource between the optical routers satisfies the east-west communication demand (i.e., the bandwidth resource demand for the east-west communication), then bandwidth scheduling is performed based on a preset policy; and in a case where the bandwidth resource of the downstream optical port or the wireless bandwidth resource between the optical routers does not satisfy the east-west communication demand (i.e., the bandwidth resource demand for the east-west communication), east-west communication resources are allocated according to service type. In this embodiment, whether the bandwidth resource of the downstream optical port or the wireless bandwidth resource between the optical routers satisfies the east-west communication demand (i.e., the bandwidth resource demand for the east-west communication) may be determined by artificial intelligence or technician of the system, and the preset policy is preset by technician according to an actual demand. For example, when the bandwidth resource of the downstream optical port or the wireless bandwidth resource between the optical routers satisfies the east-west communication demand, it represents that the current bandwidth resource of the east-west communication is sufficient, and if a bandwidth resource occupied by a current ordinary data flow is relatively small, the east-west communication between the optical routers can be performed through (i.e., by using) the bandwidth resource of the downstream optical port; if the current ordinary data flow occupies a large amount of bandwidth resource, east-west communication between the optical routers may be conducted through (i.e., by using) the wireless bandwidth resource between the optical routers.

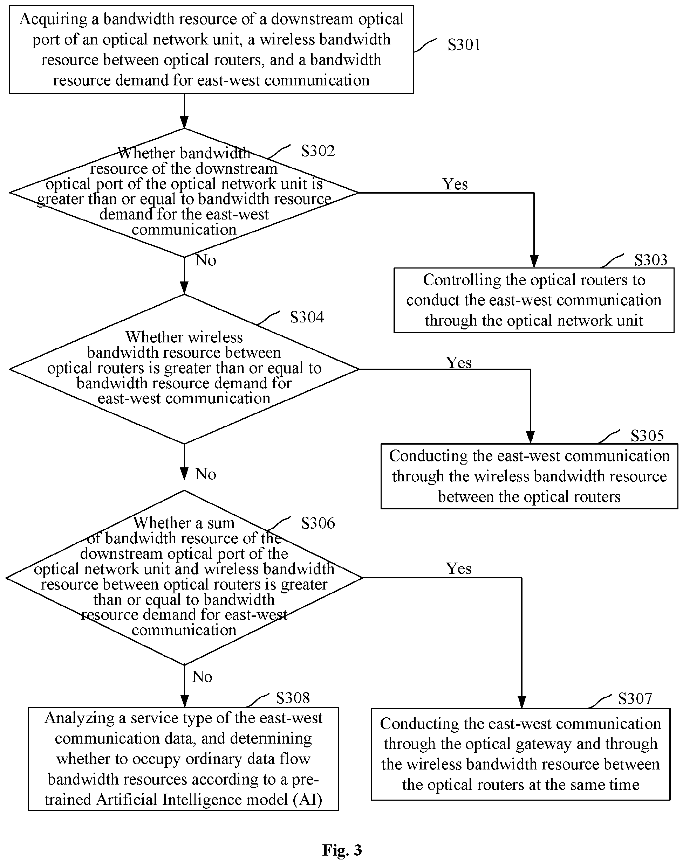

In some embodiments, as shown in Fig. 3, the method for allocating a communication resource to respective routers in the foregoing embodiment may include operations S301-S307.

In operation S301, a bandwidth resource of a downstream optical port of an optical network unit, a wireless bandwidth resource between optical routers, and a bandwidth resource demand for east-west communication (i.e., a bandwidth resource amount required by east-west communication) are acquired.

In operation S302, whether the bandwidth resource of the downstream optical port of the optical network unit is greater than or equal to the bandwidth resource demand for the east-west communication is determined.

In operation S303, in a case where the bandwidth resource of the downstream optical port of the optical network unit is greater than or equal to the bandwidth resource demand for the east-west communication, the optical routers are controlled to conduct the east-west communication through the optical network unit; otherwise, operation S304 is executed.

In operation S304, whether the wireless bandwidth resource between the optical routers is greater than or equal to the bandwidth resource demand for the east-west communication is determined.

In operation S305, in a case where the wireless bandwidth resource between the optical routers is greater than or equal to the bandwidth resource demand for the east-west communication, the east-west communication is conducted through the wireless bandwidth resource between the optical routers; otherwise, operation S306 is executed.

In operation S306, whether a sum of the bandwidth resource of the downstream optical port of the optical network unit and the wireless bandwidth resource between the optical routers is greater than or equal to the bandwidth resource demand for the east-west communication is determined.

In operation S307, in a case where the sum of the bandwidth resource of the downstream optical port of the optical network unit and the wireless bandwidth resource between the optical routers is greater than or equal to the bandwidth resource demand for the east-west communication, the east-west communication is conducted through the optical network unit and through the wireless bandwidth resource between the optical routers (at the same time).

In operation S308, in a case where the sum of the bandwidth resource of the downstream optical port of the optical network unit and the wireless bandwidth resource between the optical routers is less than the bandwidth resource demand for the east-west communication, a service type of the east-west communication data is analyzed, and whether to occupy ordinary data flow bandwidth resources is determined according to a pre-trained Artificial Intelligence model (AI).

In this embodiment, the optical network unit may dynamically allocate east-west communication resources by using a pre-trained artificial intelligence model according to the service type and bandwidth resource of the optical router. When the bandwidth resource of the downstream optical port is sufficient, the optical router is allowed to perform east-west communication through the optical network unit. When the bandwidth resource of the downstream optical port is insufficient, and the wireless bandwidth resource between the optical routers is sufficient, the east-west communication is conducted in a wireless manner; when both the bandwidth resource of the downstream optical port and the wireless bandwidth resource between the optical routers are insufficient but there is still a certain margin when the two are added, it is considered that the east-west communication may be conducted simultaneously through the optical network unit and the wireless routers; when the bandwidth resource of the downstream optical port and the wireless bandwidth resource between the optical routers are insufficient, the service type of the east-west communication data is analyzed, and a pre-trained Artificial Intelligence model (AI) determines whether to occupy the ordinary data flow bandwidth resource (i.e. the bandwidth resource apart from the bandwidth resource of the downstream optical port and the wireless bandwidth resource between the optical routers). By means of the determination logic provided in the present embodiment, the current bandwidth condition can be analyzed and positioned, and by comparing the bandwidth resource with the bandwidth demand, corresponding bandwidth resource allocation is dynamically performed for different situations.

Specifically, in this embodiment, the operation that the target bandwidth resource for the east-west communication is dynamically allocated according to the difference between the bandwidth resource of the downstream optical port of the optical network unit and the bandwidth resource demand for the east-west communication, and between the wireless bandwidth resource between the optical routers and the bandwidth resource demand for the east-west communication further includes at least one of: in a case where the sum of the bandwidth resource of the downstream optical port of the optical network unit and the wireless bandwidth resource between the optical routers is less than the bandwidth resource demand for the east-west communication, determining, through a pre-trained artificial intelligence model, whether to occupy a target data flow bandwidth resource to conduct the east-west communication, wherein the target data flow bandwidth resource is a bandwidth resource except the bandwidth resource of the downstream optical port of the optical network unit and the wireless bandwidth resource between the optical routers; or in a case where the sum of the bandwidth resource of the downstream optical port of the optical network unit and the wireless bandwidth resource between the optical routers is less than the bandwidth resource demand for the east-west communication, acquiring a service type of the optical routers, and allocating the target bandwidth resource for the east-west communication according to the service type.

It should be noted that, in this embodiment, the method for allocating the communication resource according to the service type may specifically include: acquiring a packet protocol type of the optical routers; acquiring the service type of the optical routers according to the packet protocol type of the optical routers; and allocating the communication resource according to the service type. The principle of the method for allocating the resource for the east-west communication according to the service type in this embodiment is as follows: the optical network unit may identify the service type of the optical router according to the packet protocol type of the packets sent by the optical router, for example, when the optical router sends a Highway Addressable Remote Transducer (HART) packet, the optical network unit may identify that the user is performing VR interaction via the optical router (for example, the optical router sends a multicast join packet), or the optical network unit may also identify that the user is viewing an IPTV video through the optical router; the optical network unit may also determine, according to a MAC address, whether to perform east-west communication between the optical routers, if it is determined, according to the MAC address, that east-west communication between the optical routers needs to be performed, a east-west communication resource may be allocated to each router.

Specifically, in this embodiment, allocating the communication resource according to the service type may specifically include: preferentially allocating a bandwidth resource to an optical router where a service with a high priority is located until allocation is completed; alternatively, a certain proportion of bandwidth is allocated to each service type according to the priority, and the bandwidth allocated to an optical router where a service with a relatively high priority is located is also relatively higher. The allocation of the bandwidth resource in this embodiment may be set with a priority by a technician. For example, when a technician sets the priority of the east-west communication between the optical routers to be greater than that of an ordinary data flow, the bandwidth resource of the optical network unit is preferentially used for the east-west communication between the optical routers; when a technician sets the priority of the east-west communication between the optical routers to be less than the priority of the ordinary data flow, the bandwidth resource of the optical network unit is preferentially used for the ordinary data flow communication, and after the bandwidth resource demand for the ordinary data flow communication is satisfied, the east-west communication is performed through the spare bandwidth resource of the optical network unit or the wireless bandwidth resource.

When east-west communication between the optical routers is carried out through the optical network unit for data forwarding, there are issues such as consuming the downstream optical port's uplink and downlink bandwidth and the possibility of optical router's uplink packets flooding to other optical routers, occupying downlink bandwidth, which ultimately leads to channel congestion in the downstream optical port and obstruction of ordinary data flow transmission, significantly affecting user experience. In order to address these issues, this embodiment also proposes a method for limiting flooding packets.

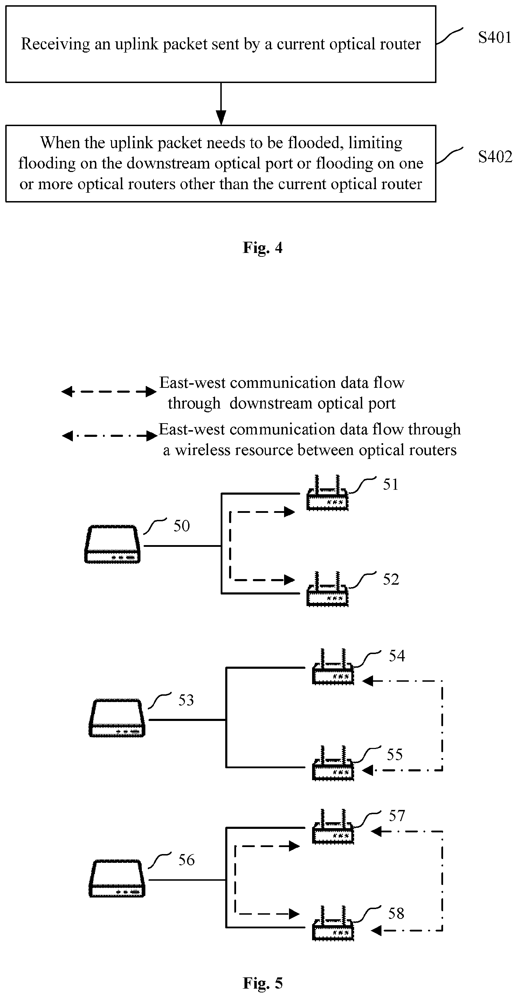

Fig. 4 is a flowchart of a method for flooding a packet and limiting a flooding rate of packets according to some embodiments of the present disclosure. Referring to Fig. 4, the method for limiting flooding packets provided by this embodiment specifically includes the following operations S401 and S402.

In operation S401, an uplink packet sent by a current optical router is received.

In operation S402, when the uplink packet needs to be flooded, flooding on the downstream optical port or flooding on one or more optical routers other than the current optical router is limited.

It should be noted that flooding refers to a process where there is no requirement to maintain the network's topology or perform any routing calculations, and instead, it only requires that the nodes that receive the information forward the data packets using a broadcast method. For example, when a source node wants to send a piece of data to a target node, the source node first sends a copy of the data through the network to each of its neighboring nodes. Each of these neighboring nodes then forwards the data to their respective nodes, excluding the node from which the data was received. This process continues until the data reaches the target node or a set Time-To-Live (TTL) of the data reaches zero. In the application scenario of this embodiment, when an uplink packet of an optical router reaches the optical network unit, in order for other routers to receive the uplink packet, it is necessary to flood the uplink packet to other optical routers. However, in scenarios where there are many optical routers connected to the optical network unit, the operation of flooding the uplink packet to other optical routers may have an impact on the downlink bandwidth resources of the associated optical interfaces.

Based on this, in operation S402, the operation that when the uplink packet needs to be flooded, the flooding on the downstream optical port or the flooding on the one or more optical routers other than the current optical router is limited specifically includes: determining whether the uplink packet needs to be flooded to the one or more optical routers other than the current optical router; and in a case of determining that the uplink packet needs to be flooded to the one or more optical routers other than the current optical router, limiting a flooding parameter for packet flooding on the downstream optical port or on the one or more optical routers other than the current optical router to a target value or within a target range. In this embodiment, the flooding parameter for packet flooding of the downstream optical port or the optical routers other than the current optical router is limited to a target value or a target range. It should be noted that the flooding parameter in this embodiment may include a rate of flooding, a network bandwidth occupied by flooding, etc. For example, in this embodiment, the packet flooding on the entire downstream optical port or the packet flooding on each optical router may be limited to n packets per second; or, for instance, the bandwidth occupied by the packet flooding on the entire downstream optical port or each optical router may be limited to npbs (n kilobits per second). This effectively reduces the occupation of downlink bandwidth resource by packet flooding and prevents congestion in the downlink optical channel.

Another embodiment of the present disclosure provides a bandwidth resource allocation method from the perspective of an optical router. The bandwidth resource allocation method includes: a bandwidth resource demand for east-west communication is sent to an optical network unit, so that the optical network unit executes the following operations: acquiring a bandwidth resource of a downstream optical port of an optical network unit; acquiring a wireless bandwidth resource between optical routers; and dynamically allocating a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

When east-west communication between the optical routers is carried out through the optical network unit for data forwarding, there are issues such as consuming the downstream optical port's uplink and downlink bandwidth and the possibility of optical router's uplink packets flooding to other optical routers, occupying downlink bandwidth, which ultimately leads to channel congestion in the downstream optical port and obstruction of ordinary data flow transmission, significantly affecting user experience. In order to address these issues, the present embodiment also provides a method for limiting flooding packets, specifically including: sending an uplink packet of a current optical router to the optical network unit; and receiving a flooding limitation instruction returned by the optical network unit, and limiting flooding on one or more optical routers other than the current optical router. The limiting the flooding on the one or more optical routers other than the current optical router includes: limiting a flooding parameter for packet flooding on the one or more optical routers other than the current optical router to a target value or within a target range. In this embodiment, by limiting the flooding parameter of the flooding packets on the optical routers other than the current optical router to a target value or a target range, occupation of downlink bandwidth resources by the flooding packets can be effectively reduced, and channel congestion of the downstream optical port can be prevented.

Corresponding to the method described in the foregoing operations S302-S306, Fig. 5 is a schematic diagram of east-west communication conducted between optical routers and an optical network unit based on three results of bandwidth resource allocation acquired by determination logic according to an exemplary embodiment provided in some embodiments of the present disclosure. When the number of optical routers subordinate to the optical network unit in the foregoing embodiment is two and the all-optical network FTTR is P2MP, as shown in Fig. 5, the optical network unit is connected to an optical router 1 and an optical router 2 through an optical splitter and performs data exchange, the detailed flow of the method for the optical network unit to perform three different modes of east-west communication in this embodiment is as follows:
(1) In a case where the bandwidth resource of the downstream optical port of the optical network unit 50 is greater than or equal to the bandwidth demand for the east-west communication, the optical network unit 50 controls the optical router 51 and the optical router 52 to perform east-west communication through the downstream optical port of the optical network unit 50.
(2) In a case where the wireless bandwidth resource between the optical router 54 and the optical router 55 is greater than or equal to the bandwidth demand for the east-west communication, the east-west communication is performed through the wireless bandwidth resource between the optical router 54 and the optical router 55.
(3) In a case where the sum of the bandwidth resource of the downstream optical port of the optical network unit 56 and the wireless bandwidth resource between the optical router 57 and the optical router 58 is greater than or equal to the bandwidth demand for the east-west communication, the east-west communication is performed simultaneously through the optical network unit 56 and through the wireless bandwidth resource between the optical network unit 56 and the optical router 57.

Correspondingly, a specific flow of the optical router performing three different modes of east-west communication in this embodiment is as follows: when the number of optical routers subordinate to the optical network unit in the foregoing embodiment is two and the all-optical network FTTR is P2MP, as shown in Fig. 5, the optical network unit is connected to the optical router 1 and the optical router 2 through an optical splitter and performs data exchange, and the specific flow is as follows.
(1) The optical router 1 sends an amount of bandwidth resources required for east-west communication (i.e., a bandwidth resource demand amount for east-west communication) to the optical network unit, so that the optical network unit executes the following operations: acquiring a bandwidth resource of a downstream optical port of the optical network unit, and acquiring a wireless bandwidth resource between the optical router 1 and the optical router 2.
(2) The optical router 1 dynamically allocates a target bandwidth resource used for east-west communication according to a difference among the bandwidth resource of the downstream optical port of the optical network unit, the wireless bandwidth resource between the optical router 1 and the optical router 2, and the bandwidth resource demand for the east-west communication.
(3) The optical router 1 sends an uplink packet of the current optical router to the optical network unit, receives a flooding limitation instruction returned by the optical network unit, and limits flooding of the optical router 2. The limiting the flooding of the optical router 2 includes: limiting a flooding parameter of packet flooding of the optical router 2 to a target value or a target range.

In conclusion, in the present disclosure, two bandwidth resources, i.e. a bandwidth resource of a downstream optical port and a wireless bandwidth resource between optical routers are acquired in real time, then the target bandwidth resource are dynamically allocated according to the difference between the two bandwidth resources and the bandwidth resource demand, so that the bandwidth resource for the east-west communication can be allocated reasonably according to the utilization of the bandwidth resources, reducing the consumption or occupation of uplink and downlink bandwidth of the downstream optical port and the downlink bandwidth of the optical router, and improving the effective utilization rate of the downstream optical port and the wireless bandwidth, this improves user experience.

In addition, the bandwidth resource allocation methods and apparatuses, the terminal, the optical network unit and the storage medium proposed in the present disclosure may be applied to various optical network application scenarios. For example, the bandwidth resource allocation methods and apparatuses, the terminal, the optical network unit and the storage medium of the present disclosure may be combined with technologies such as a 10G PON, a 50G PON, and a WIFI 8, so as to provide wider bandwidth and better user experience.

It should also be appreciated that various implementations provided by the embodiments of the present disclosure may be combined arbitrarily to achieve different technical effects.

Based on the bandwidth resource allocation method described in the foregoing embodiments, a corresponding all-optical network communication system can be obtained, which is described as follows. The all-optical network communication system of this embodiment includes a P2P or P2MP optical network unit, several optical routers, and terminals. When there is only one optical router, the connection between the optical network unit and the optical router is P2P. When there are multiple optical routers, the connection between the optical network unit and the optical routers is P2MP.

The P2P or P2MP optical network unit acquires the bandwidth resource of the downstream optical port and the wireless bandwidth resource between the optical routers, and allocates an east-west communication resource based on the bandwidth resource of the downstream optical port of the optical network unit and the wireless bandwidth resource between the optical routers. Specifically, the optical network unit may obtain the wireless networking and wireless bandwidth resource utilization between the optical routers through a private data protocol.

Terminals have data connections with optical routers. When a terminal sends an internet request, there is an ordinary data flow between the optical router and the optical network unit, which is used to transmit the network data required by the terminal. When different optical routers conduct east-west communication, the optical network unit will acquire the east-west communication bandwidth demand. If the bandwidth resource of the downstream optical port or the wireless bandwidth resource between the optical routers satisfy the east-west communication bandwidth demand, a preset strategy is used for bandwidth scheduling; if the bandwidth resource of the downstream optical port or the wireless bandwidth resource between the optical routers cannot satisfy the east-west communication bandwidth demand, then the east-west communication resource is allocated according to a service type.

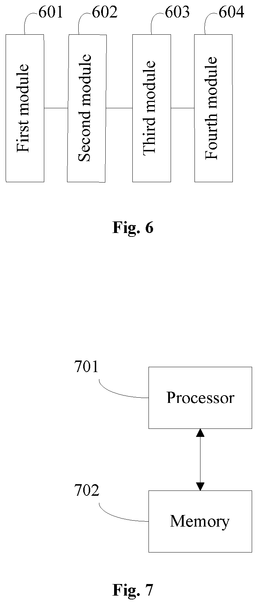

In addition, an embodiment of the present disclosure provides a bandwidth resource allocation apparatus. Fig. 6 is a schematic diagram of a bandwidth resource allocation apparatus according to some embodiments of the present disclosure. Referring to Fig. 6, the bandwidth resource allocation apparatus includes:
a first module 601, configured to acquire a bandwidth resource of a downstream optical port of an optical network unit;
a second module 602, configured to acquire a wireless bandwidth resource between optical routers;
a third module 603, configured to acquire a bandwidth resource demand for east-west communication; and
a fourth module 604, configured to dynamically allocate a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

In addition, an embodiment of the present disclosure provides another bandwidth resource allocation apparatus. Fig. 7 is a schematic diagram of another bandwidth resource allocation apparatus according to some embodiments of the present disclosure. Referring to Fig. 7, the bandwidth resource allocation apparatus includes:
at least one processor 701; and
at least one memory 702 for storing at least one program.

When the at least one program is executed by the at least one processor 701, bandwidth resource allocation methods as described in the foregoing embodiments are implemented.

Contents in the foregoing method embodiments are all applicable to the apparatus embodiments, and functions implemented by the apparatus embodiments are the same as those of the foregoing method embodiments, and beneficial effects achieved are also the same as those achieved by the foregoing method embodiments.

In addition, an embodiment of the present disclosure provides a terminal, including: a memory, a processor and a computer program stored in the memory and operable on the processor, wherein when executing the computer program, the processor realizes the bandwidth resource allocation method as described in the foregoing embodiments.

In addition, an embodiment of the present disclosure provides an optical network unit, including: a memory, a processor and a computer program stored in the memory and operable on the processor, wherein when executing the computer program, the processor realizes the bandwidth resource allocation method as described in the foregoing embodiments.

In addition, an embodiment of the present disclosure provides a computer-readable storage medium, which stores computer-executable instructions, wherein the computer-executable instructions are used for executing the bandwidth resource allocation method as described in the foregoing embodiments.

By the same reasoning, the content in the foregoing method embodiments is applicable to this storage medium embodiment, and functions implemented by this storage medium embodiment are the same as those in the foregoing method embodiments, and beneficial effects achieved by this storage medium embodiment are also the same as those achieved by the foregoing method embodiments.

Beneficial effects of the bandwidth resource allocation methods and apparatuses, the terminal, the optical network unit, and the storage medium provided by the embodiments of the present disclosure are as follows. In the embodiments of the present disclosure, a bandwidth resource of a downstream optical port of an optical network unit, a wireless bandwidth resource between optical routers, and a bandwidth resource demand for east-west communication are acquired first; and then a target bandwidth resource for the east-west communication is dynamically allocated according to a difference between the bandwidth resource of the downstream optical port of the optical network unit and the bandwidth resource demand for the east-west communication, and between the wireless bandwidth resource between the optical routers and the bandwidth resource demand for the east-west communication. In the technical solution provided in the embodiments of the present disclosure, two bandwidth resources, i.e. a bandwidth resource of a downstream optical port and a wireless bandwidth resource between optical routers are acquired in real time, then the target bandwidth resource are dynamically allocated according to the difference between the two bandwidth resources and the bandwidth resource demand, so that the bandwidth resource for the east-west communication can be allocated reasonably according to the utilization of the bandwidth resources, reducing the consumption or occupation of uplink and downlink bandwidth of the downstream optical port and the downlink bandwidth of the optical router, and improving the effective utilization rate of the downstream optical port and the wireless bandwidth, this improves user experience. In some exemplary embodiments, the functions/operations mentioned in the flowchart may occur in a sequence different from that mentioned in the operational diagram. For example, depending on the functions/operations involved, two consecutively shown boxes can actually be executed substantially simultaneously, or the boxes can sometimes be executed in the reverse order. Furthermore, the embodiments presented and described in the flowchart of the present disclosure are provided in an illustrative manner, with the aim of providing a more comprehensive understanding of the technology. The methods disclosed are not limited to the operations and logical processes presented herein. It is anticipated that various exemplary embodiments will arise, in which the order of operations is changed, and sub-operations described as part of larger operations are executed independently.

Moreover, although described in the context of functional modules, it should be understood that, unless otherwise stated, one or more functions and/or features may be integrated into a single physical device and/or software module, or one or more functions and/or features may be implemented in separate physical devices or software modules. It should also be understood that a detailed discussion of the actual implementation of each module is not necessary for understanding the present disclosure. More specifically, the actual implementation of the module will be understood by engineers within the routine technology, given the attributes, functions, and internal relationships of the various functional modules disclosed in the present disclosure. Therefore, technicians in this field can implement the application as described in the claims without excessive experimentation. It should also be understood that the specific concepts disclosed are illustrative and not intended to limit the scope of the present disclosure, which is determined by the full extent of the appended claims and their equivalents.

If the functions are realized in the form of software functional units and sold or used as independent products, they can be stored in a computer-readable storage medium. Based on this understanding, the essence of the technical solution of the present disclosure or the part that contributes to the existing technology, or a part of the technical solution, can be embodied in the form of a software product, which is stored in a storage medium and includes several instructions to enable a computer device (which can be a personal computer, server, or network device, etc.) to execute all or part of the operations of the various embodiments of the methods provided in the present disclosure. The aforementioned storage medium include: Universal Serial Bus (USB) drives, hard drives, Read-Only Memory (ROM), Random Access Memory (RAM), magnetic disks, or optical discs, and various other medium that can store program code.

The logic and/or operations represented in the flowchart or described in other ways can be considered as a sequence of executable instructions for implementing logical functions, which can be specifically realized in any computer-readable medium for use by an instruction execution system, device, or apparatus (such as a computer-based system, a system with a processor, or other systems that can take instructions from an instruction execution system, device, or apparatus and execute them), or in conjunction with these instruction execution systems, devices, or apparatuses. For the purposes of this specification, "computer-readable medium" can be any device that can contain, store, communicate, propagate, or transmit programs for use by an instruction execution system, device, or apparatus, or in conjunction with these instruction execution systems, devices, or apparatuses.

More specific examples of computer-readable medium (non-exhaustive list) include: electronic devices with one or more wired electrical connection parts, portable computer disk boxes (magnetic devices), Random Access Memory (RAM), Read-Only Memory (ROM), Erasable Programmable Read-Only Memory (EPROM or flash memory), optical devices, and portable Compact Disc Read-Only Memory (CDROM). Additionally, computer-readable medium can even be paper or other suitable medium on which programs can be printed, as programs can be obtained electronically, for example, by optically scanning paper or other medium, followed by editing, interpretation, or other appropriate processing as necessary, and then storing them in computer memory.

It should be understood that various parts of the present disclosure can be implemented in hardware, software, firmware, or a combination thereof. In the aforementioned implementations, multiple operations or methods can be realized by software or firmware stored in memory and executed by an appropriate instruction execution system. For example, if implemented in hardware, the same or a combination of the following known technologies in the field can be used: discrete logic circuits with logic gate circuits for implementing logical functions of data signals, application-specific integrated circuits with appropriate combinational logic gate circuits, Programmable Gate Arrays (PGA), Field-Programmable Gate Arrays (FPGA), etc.

In the description of the present disclosure, the reference terms "one embodiment", "another embodiment", or "certain embodiments", etc., mean that the specific features, structures, materials, or characteristics included in the description of the implementation or example are contained in at least one embodiment or example of the present disclosure. In the present disclosure, the indicative expressions of the above terms do not necessarily refer to the same embodiment or example. Moreover, the specific features, structures, materials, or characteristics can be appropriately combined in any one or more embodiments or examples.

Although the embodiments of the present disclosure have been shown and described, those having ordinary skill in the art can understand that various modifications, replacements, and variations can be made to these embodiments without departing from the principles and purposes of the present disclosure, and the scope of the present disclosure is defined by the claims and their equivalents.

Above all, the above embodiments are used only for illustrating the technical solution of the present disclosure, not for limiting it; although the technical solution of the present disclosure has been described in detail with reference to the aforementioned embodiments, those having ordinary skill in the art should understand that they can still modify the technical solutions recorded in the aforementioned embodiments, or equivalently replace some technical features; and these modifications or replacements do not make the essence of the corresponding technical solution deviate from the scope of the technical solutions of the embodiments of the present disclosure.

## Claims

1. A bandwidth resource allocation method, comprising:
acquiring a bandwidth resource of a downstream optical port of an optical network unit;
acquiring a wireless bandwidth resource between optical routers;
acquiring a bandwidth resource demand for east-west communication; and
dynamically allocating a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

2. The bandwidth resource allocation method according to claim 1, further comprising:
receiving an uplink packet sent by a current optical router; and
when the uplink packet needs to be flooded, limiting flooding on the downstream optical port or flooding on one or more optical routers other than the current optical router.

3. The bandwidth resource allocation method according to claim 2, wherein when the uplink packet needs to be flooded, limiting the flooding on the downstream optical port or the flooding on the one or more optical routers other than the current optical router comprises:
determining whether the uplink packet needs to be flooded to the one or more optical routers other than the current optical router; and in a case of determining that the uplink packet needs to be flooded to the one or more optical routers other than the current optical router, limiting a flooding parameter for packet flooding on the downstream optical port or on the one or more optical routers other than the current optical router to a target value or within a target range.

4. The bandwidth resource allocation method according to claim 1, wherein dynamically allocating the target bandwidth resource for the east-west communication according to the difference between the bandwidth resource of the downstream optical port of the optical network unit and the bandwidth resource demand for the east-west communication, and between the wireless bandwidth resource between the optical routers and the bandwidth resource demand for the east-west communication comprises:
in a case where the bandwidth resource of the downstream optical port of the optical network unit is greater than or equal to the bandwidth resource demand for the east-west communication, controlling the optical routers to conduct the east-west communication through the optical network unit; or
in a case where the wireless bandwidth resource between the optical routers is greater than or equal to the bandwidth resource demand for the east-west communication, conducting the east-west communication through the wireless bandwidth resources between the optical routers; or
in a case where a sum of the bandwidth resource of the downstream optical port of the optical network unit and the wireless bandwidth resource between the optical routers is greater than or equal to the bandwidth resource demand for the east-west communication, conducting the east-west communication through the optical network unit and through the wireless bandwidth resource between the optical routers.

5. The bandwidth resource allocation method according to claim 4, wherein dynamically allocating the target bandwidth resource for the east-west communication according to the difference between the bandwidth resource of the downstream optical port of the optical network unit and the bandwidth resource demand for the east-west communication, and between the wireless bandwidth resource between the optical routers and the bandwidth resource demand for the east-west communication further comprises at least one of:
in a case where the sum of the bandwidth resource of the downstream optical port of the optical network unit and the wireless bandwidth resource between the optical routers is less than the bandwidth resource demand for the east-west communication, determining, through a pre-trained artificial intelligence model, whether to occupy a target data flow bandwidth resource to conduct the east-west communication, wherein the target data flow bandwidth resource is a bandwidth resource except the bandwidth resource of the downstream optical port of the optical network unit and the wireless bandwidth resource between the optical routers; or
in a case where the sum of the bandwidth resource of the downstream optical port of the optical network unit and the wireless bandwidth resource between the optical routers is less than the bandwidth resource demand for the east-west communication, acquiring a service type of the optical routers, and allocating the target bandwidth resource for the east-west communication according to the service type.

6. The bandwidth resource allocation method according to claim 1, wherein acquiring the wireless bandwidth resource between the optical routers comprises:
acquiring the wireless bandwidth resource between the optical routers based on a private data protocol; and
in a case where the wireless bandwidth resource between the optical routers is less than a preset value, giving a prompt.

7. A bandwidth resource allocation method, comprising:
sending a bandwidth resource demand for east-west communication to an optical network unit, so that the optical network unit executes the following operations:
acquiring a bandwidth resource of a downstream optical port of an optical network unit;
acquiring a wireless bandwidth resource between optical routers; and
dynamically allocating a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

8. The bandwidth resource allocation method according to claim 7, further comprising:
sending an uplink packet of a current optical router to the optical network unit; and
receiving a flooding limitation instruction returned by the optical network unit, and limiting flooding on one or more optical routers other than the current optical router.

9. The bandwidth resource allocation method according to claim 8, wherein limiting the flooding on the one or more optical routers other than the current optical router comprises:
limiting a flooding parameter for packet flooding on the one or more optical routers other than the current optical router to a target value or within a target range.

10. A bandwidth resource allocation apparatus, comprising:
a first module, configured to acquire a bandwidth resource of a downstream optical port of an optical network unit;
a second module, configured to acquire a wireless bandwidth resource between optical routers;
a third module, configured to acquire a bandwidth resource demand for east-west communication; and
a fourth module, configured to dynamically allocate a target bandwidth resource for the east-west communication according to a difference between the bandwidth resource of the downstream optical port of the optical network unit and the bandwidth resource demand for the east-west communication, and between the wireless bandwidth resource between the optical routers and the bandwidth resource demand for the east-west communication.

11. A bandwidth resource allocation apparatus, comprising:
at least one processor; and
at least one memory for storing at least one program,
wherein the at least one program, when being executed by the at least one processor, implements the bandwidth resource allocation method according to any one of claims 1-6 or any one of claims 7-9.

12. A terminal, comprising a memory, a processor and a computer program stored in the memory and capable of running on the processor, wherein the processor, when executing the computer program, implements the bandwidth resource allocation method according to any one of claims 1-6 or any one of claims 7-9.

13. An optical network unit, comprising a memory, a processor and a computer program stored in the memory and capable of running on the processor, wherein the processor, when executing the computer program, implements the bandwidth resource allocation method according to any one of claims 1-6.

14. A computer-readable storage medium, storing computer-executable instructions, wherein the computer-executable instructions are used for executing the bandwidth resource allocation method according to any one of claims 1-6 or any one of claims 7-9.
